# EUROPEAN PATENT SPECIFICATION

(11) **EP 3 558 008 B1**
(45) Date of publication and mention of the grant of the patent: **17.04.2024**
(21) Application number: 17829193.6
(22) Date of filing: 20.12.2017
(51) Int. Cl.: A22B 5/18, A22C 17/16

(54) **A SYSTEM FOR PROCESSING ANIMAL INTESTINES ESPECIALLY IN THE FINISHING PROCESS**
SYSTEM ZUR VERARBEITUNG VON TIERDÄRMEN, INSBESONDERE IM ENDBEARBEITUNGSVERFAHREN
SYSTÈME DE TRAITEMENT D'INTESTINS D'ANIMAUX, EN PARTICULIER DANS UN PROCESSUS DE FINITION

(30) Priority: 21.12.2016 DK PA201600775
(43) Date of publication of application: 30.10.2019
(73) Proprietor: Teknologisk Institut, 2630 Taastrup (DK)
(72) Inventor: HENRIKSEN, Ole, 2630 Taastrup (DK); PETERSEN, Anders Kuhr, 2630 Taastrup (DK)
(74) Representative: AWA Denmark A/S
(86) International application number: PCT/EP2017/083865
(87) International publication number: WO 2018/115147

(56) References cited:
- WO-A1-94/26120
- GB-A- 612 483
- US-A- 2 035 332
- US-A- 2 125 950
- US-A- 2 169 905
- US-A- 3 949 447

## Description

The present invention relates to a system and process for treating small intestines. Especially the system is a loading and roller system providing a possibility of automatic treatment of intestines in the finishing process in the handling of small intestines such as at abattoirs.

### Background of invention

When animals such as pigs are slaughtered at abattoirs, the intestines may be cleaned and treated to obtain products which can be used e.g. as casings in the production of sausages. Systems and methods of treatment of the intestines are disclosed for example in US3949447, US2169905 or US21255950.

The small intestines obtained from slaughtered animals such as pigs consist generally of four layers of intestinal tissue. These layers from inside to outside are: Mucose lining (mucosa), submucose membrane (submucosa), muscular layer and serose membrane (serosa). For natural casing manufacture, one or more of these layers are removed during processing of the intestines and the number of removed layers are depending on the type of casing to be fabricated. Non-edible casings may include the submucosa and serosa, whereas edible casings may be submucosa only.

In the process of obtaining the edible membrane by removing the other membranes/layers, the small intestines are detached from adhering mesenteric (connective and fatty) tissue. The intestinal content such as manure is removed by washing and the empty intestines are soaked or flushed with water to dissolve the mucose lining (mucosa). The small intestines may be passed through a set of rollers to loosen the tissue layers and to remove the mucosa.

Parts of the outside layers i.e. serosa may be removed when detaching the small intestine from the mesenteric tissue. The rest of the serosa layer and the muscular layer can be removed during treatment by rollers. The finishing process where serosa is broken and removed is a process involving manual loading of the small intestines in a system including rollers. This manual loading into the roller section is performed in a working position which possesses strain on the abattoir operator who is handling the intestines, furthermore the operator lifts/pulls the intestines when part of the intestines are being treated in the roller system, this lifting and pulling is a further load stress of the operator.

The invention presented herein is a system and a process providing for the possibility of automatic loading into and handling of small intestines in roller sections and especially in the 'finishing' process where the serosa membrane is broken and removed from submucosa. The automatic loading and handling can reduce the number of operators handling the small intestines in the finishing process and avoid the load stress of these operators.

Thus it is an object of the present invention to provide a treatment system with a roller section that facilitates automatic loading of small intestines into the roller section.

### Summary of invention

The invention relates to a treatment system for automatic treatment of animal intestines as specified in claim 1. The system treats the intestines, such as for removal of the serose membrane from the submucose membrane of at least one pre-treated intestine. The system comprises a roller section which comprises at least:
a. a sectioned first rotatable roller which is sectioned in at least two sub-sections transversely to an imaginary axis running through the at least two sub-sections such that each sub-section can rotate around this imaginary axis, the at least two sub-sections being separated along the imaginary axis leaving a space between the sub-sections, and
b. a second rotatable roller with an axis being parallel to the imaginary axis of the sectioned first roller, the second roller being of a length making the second roller capable of working together with each of the at least two sub-section of the sectioned first roller.

The roller section thus comprises at least a sectioned first rotatable roller which is sectioned in at least two sub-sections leaving a space between the sub-sections through which the intestines may be introduced to get in between the first and a second roller for treatment.

The treatment system may be a finish system for finishing the treatment of intestines i.e. where the submucose membrane is obtained freed from the mucose membrane, muscular layer and serose membrane.

The roller system may comprise e.g. four rollers.

A slide shoe may be connected to each sub-section of the first sectioned roller, the slide shoe secure the intestines under preparation between the first and second rollers do not slide into the area between the two sub-sections of the first roller. The treatment system may further comprise a feeder for feeding intestines into the roller section, the feeder may comprise a feeder belt with guiding members for guiding a part of at least one intestine towards the roller section.

A gripper may be located before the feeder to automatic load intestines onto the feeder. The gripper may comprise a suction disc for holding one or more intestines while being lifted from a pick-up area towards a feeder belt.

The feeder may comprise collecting and handing-over means for collecting a pre-determined number of intestines being transported by the feeder belt and before handing-over the collected intestines to a means for directing the intestines into the roller section. The collecting and handing-over means may be located close to the uppermost part of the feeder belt such that intestines elevated by the feeder belt automatically slide to a resting area of the collecting and handing-over means.

The treatment system may further comprise an automatic handling section or a robot section for handling the intestines during part of the time the intestines are treated in the roller section. The handling section or robot section handles the intestines to secure the serose membrane is broken and afterwards pulled off during the treatment in the roller system.

The automatic handling section or robot section may comprise at least two handling fingers, at least two pressure pads, each connected to a handling finger for firmly holding an intestine, and/or robot movement means for controlling the movement of the handling fingers.

In one aspect of the present disclosure there is provided a method for treating animal intestines, the method may comprise the steps of
a. Obtaining at least one intestine to be treated such as at least one intestine pre-treated such that the mucose lining and the muscular layer is at least partly removed,
b. Treating the intestines in a roller system comprising at least a first sectioned roller.

When treating the intestines in the treatment system the method may comprise the steps of
a. The intestines are fed in a looped position, i.e. the intestines are with their middle part transported in between the two roller parts of the first sectioned roller and each of the tail parts of the intestines are hereby fed into the treatment system between the first and second roller,
b. The intestines are treated between the first and second rollers with an overall moving direction of the intestines from below and up between the first and second roller,
c. The surface of the serose membrane is mechanically at least partly broken by the treatment of the first sectioned roller which has a grooved surface capable of bending and holding the intestines, the final breakage of the membrane may be performed by pulling the intestines are pulled upward,
d. The intestines are moved in a sideway direction to release the middle part of the serose membrane,
e. The serose membrane is pulled off the submucose membrane while the submucose membrane is pulled forward by pulling rollers,
f. The submucose membranes are delivered into a collecting basin.

Preferably the method is an automatic method comprising automatic feeding of intestines into a roller system with a first sectioned roller and where a robot is handling the intestines when the intestines enters the first sectioned roller.

### Brief description of figures

Fig. 1 illustrates the automatic finishing system as described herein.
Fig. 2 illustrates a roller section and a robot section of a treatment system for treating intestines.
Fig. 3 illustrates the roller section in a cross section.
Fig. 4 illustrates a side view of a robot section.
Fig. 5 illustrates a side view of a feeder system.
Fig. 6 illustrates a front view of a feeder system.
Fig. 7 illustrates a side view of a gripper.
Fig. 8 illustrates part of a gripper and its location in a treatment system for treating intestines.

### Detailed description of the invention

The present invention relates to a treatment system for automatic treating intestines and may comprise a feeder section, a roller section and a robot section or an automatic handling section. The feeder section may collect intestines and deliver these to a robot section which handles the intestines when these are treated in a roller section. The entire process may be automatic.

The treatment system as described herein may be part of a treatment line for treating intestines where the treatment line comprises e.g. 2-6 roller sections for performing treatment of intestines, the treatment system described herein may be the last roller section performing the 'finish' of the intestine treatment. The other roller sections of the line may be located before the system described herein and may each perform different processes such as removal of the mucosa and removal of the muscular layer.

An aspect of the invention relates to a treatment system for treatment of animal intestines, such as for removing the serose membrane from the submucose membrane of at least one pre-treated intestine, the system comprises a roller section which comprises at least:
a. a sectioned first rotatable roller which is sectioned in at least two sub-sections transversely to an imaginary axis running through the at least two sub-sections, the at least two sub-sections being separated along the imaginary axis leaving a space between the sub-sections, and
b. a second rotatable roller with an axis being parallel to the imaginary axis of the sectioned first roller, the second roller being of a length making the second roller capable of working together with each of the at least two sub-sections of the sectioned first roller.

The roller section thus comprises at least a sectioned first rotatable roller which is sectioned in at least two sub-sections leaving a space between the sub-sections through which the intestines may be introduced to get in between the first and a second roller for treatment.

With the term `imaginary axis' in connection to a roller is meant an imaginary axis which extend through the roller and which the roller can rotate around, and for the first sectioned roller such that each sub-section can rotate around this imaginary axis.

The treatment system may be a 'finishing system' for finishing the treatment of intestines i.e. where the submucose membrane finally is obtained freed from the mucose membrane, the muscular layer and the serose membrane.

The term 'intestine' as used herein both means the non-treated intestine obtained from a slaughtered animal i.e. with the mucosa, submucosa, muscular layer and serosa and which may further contain non-digested and/or digested feed (manure). The term 'intestine' is also used when describing the partly treated intestine i.e. when the mucosa and/or the muscular layer is partly or fully removed, hereby the 'intestine' may e.g. be the submucosa with the surrounding serosa. In the end of the treatment when the serosa membrane is removed 'intestine' means the isolated submucose membrane.

A pre-treated intestine is an intestine where the mucosa and the muscular layer are removed at least partly.

The intestine to be treated is preferably the small intestine from slaughtered animals, such as from pigs, cattle, goats, sheep.

Each sub-section of the sectioned first roller preferably has a shaft only driven and attached to a frame of the roller system in the end which is away from the space between the at least two sub-sections. The space between the two sub-sections may be at least 5 cm, such as between 5 and 40 cm. The end of each sub-section at the spacing between the rollers may be rounded or have a cone shape when seen perpendicular to the longitudinal direction of the roller, preferably the cone shape is not with a pointing end but may look rounded or be a truncated cone. The sub-sections of the sectioned first roller are preferably each partly surrounded by an enclosure or house screening the roller. The enclosure preferably has a spacing corresponding to the space between the sub-sections of the sectioned first roller, the spacing in the enclosure may be between 0.1 cm and 2 m, such as at least 2 cm, e.g. between 1 cm and 100 cm, such as between 2 cm and 50 cm, such as between 5 cm and 30 cm, e.g. between 8 cm and 20 cm, preferably about 10 cm. The spacing between the housing screening the sub-sections of the sectioned first roller is preferably of a dimension allowing simultaneous transport of two intestine tails of a total of 1-30 intestines. Thus if treating 9 intestines simultaneously these are preferably folded and a total of 18 intestine tails are transported in between the spacing of the housing.

In a treatment system for treating intestines the intestines are preferably loaded between rollers in a folded configuration with a loop made about the middle of each intestine. Intestines of about 20 M are hereby handled with a leading loop part and tail parts each of about 10 M. With the term 'intestine tail' or just 'tail' is meant the part of an intestine which follows the looped part loaded in between a roller set. The length of an intestine tail may differ between different intestines and may also differ for a single intestine, depending on the total intestine length and whether the loop is made at the middle of the intestine.

The treatment system may further comprise a third and optionally also a fourth and/or further rotatable rollers. Preferably the third, fourth and further rollers are drawing rollers securing a drawing force executed upon the intestines and which force is larger than the drawing force of the first roller, which preferably rolls in the opposite direction compared to the overall direction of the intestines to be treated.

All the rollers of the treatment system are longitudinal cylindrical rollers, which preferably are parallel to each other along an axis of the longitudinal direction of each roller. The diameter of each roller may be any suitable for treatment of intestines, such as 5-30 cm.

The length of the non-sectioned rollers is at least 0.5 m, such as at least 1 m, e.g. at least 1.5 m, such as at least 2 m. Each section of the first sectioned roller is less than half the length of the non-sectioned rollers, such as about 35-45 cm for 1 m non-sectioned rollers, 66-70 cm for 1.5 m non-sectioned rollers and 80-95 cm for 2 m non-sectioned rollers.

Preferably the sectioned first roller has a grooved surface and the grooves may be parallel to the length of the roller. The sectioned first roller may have a surface of rubber. Other surface structures and surface materials may also be suitable. The function of the first sectioned roller when used for the finishing process is to disrupt the outermost layer i.e. the serose membrane and preferably perform this disruption in one zone of each tail of the treated intestines hereby making the serose membrane into three parts on each intestines, a middle part and two tail parts. The surface structure and the material of the sectioned first roller may be selected together with the determined working distance between the first sectioned roller and the second roller to obtain the desired effect of the treatment in the roller system.

The second roller may have a smooth surface and/or the second roller may have a surface of metal.

The third roller may have a grooved surface and the grooves may be parallel to the length of the roller. The third roller may have a surface of rubber.

The fourth roller may have a smooth surface and/or the fourth roller may have a surface of metal.

The first roller and the second roller are preferably located close to each other. The second roller and the third roller are preferably located close to each other. The third roller and the fourth roller are preferably located close to each other. A fifth roller may be located close to the fourth roller. With `located close to each other' means the distance between the rolling rollers are such that at least one intestine can be treated or pulled by the rollers being located close to each other.

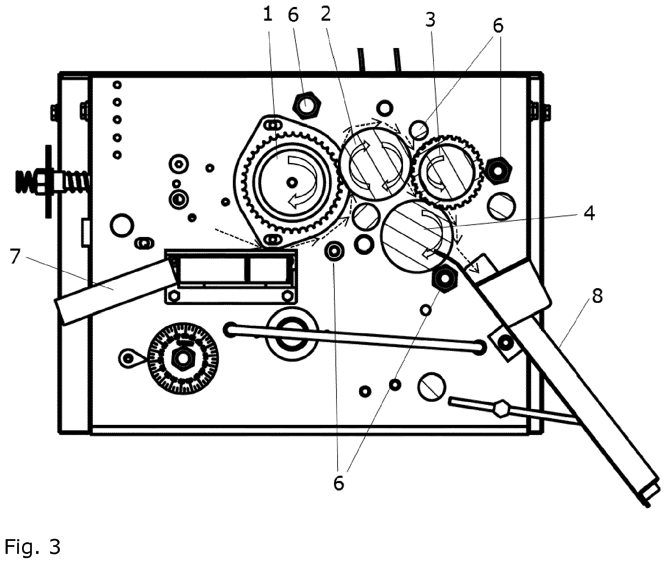

The first, second, third and fourth roller are preferably positioned according to each other such that at least one intestine can be pulled from beneath between the first and second rollers, and further pulled by the pulling effect of the second/third roller and of the third/fourth roller, and such that material left behind when intestines are treated by the first and second rollers this material will not come into contact with any subsequent rollers. When observed along the axis of the rollers, the first, second and third roller may be positioned substantially horizontal to each other and with the second roller in the center. The fourth roller may be positioned beneath the third roller and a towards the second roller such that leading ends of intestines pulled by the second/third roller will get into contact with the fourth roller and be pulled in between the third and fourth roller. This is illustrated in Fig. 3. Preferably there is no contact between the second and fourth rollers.

The first roller preferably rolls opposite the transport direction of the intestines to be treated. The intestines have an overall transport direction from below and in between the first and second rollers, then the first roller rolls such that if this roller has the overall strength the intestines will be pushed backward and thus not drawn in between the first and second rollers. The effect of the rolling direction of the first roller is to push the serosa off the submucosa and deliver the serosa beneath the first and second rollers.

The second roller preferably rolls in the direction of the intestines to be treated, such that the first roller and the second roller have opposite drawing effect. The third roller preferably rolls in the direction of the intestines to be treated. The fourth roller preferably also rolls in the direction of the intestines to be treated. The pulling effect of the second/third roller and of the third/fourth roller is preferably higher than the pulling effect of the first roller, such that the at least one intestine is pulled between the first/second, and subsequent between the second/third and third/fourth rollers and so forth if more than four rollers are used in the roller system.

The speed of rotation of the first roller is preferably higher than the speed of rotation of the other rollers, such as at least two times higher, such as 2-20 times higher, e.g. 5-15 times higher, such as 8-12 times higher, preferably about 10 times higher.

At least one slide shoe may be connected to or pressed towards e.g. the upper part of the second roller and not far from where the first and second roller are close to each other, the slide shoes are preferably also located in the region close to - but not within - the spacing being present between the two sub-sections of the first sectioned roller. A bar such as a T-bar may hold the at least one slide shoe towards the second roller. Preferably one slide shoe is present on each side of the spacing between the sub-sections of the first roller. The T-bar may be attached to the frame of the treatment system, such as in the bottom part of the frame and in front of the roller section when observed in the transport direction of the intestines. The T-bar may further have the upper section of the vertical part or the 'T' being located in the spacing between the sub-sections of the first roller. The at least one slide shoe may secure the intestines under preparation between the first and second rollers do not slide into the spaced area between the two sub-sections of the first roller, hereby the at least one intestine under treatment can be kept in the roller system. When the vertical part of the T-bar's 'T' is located in the spacing between the sub-sections of the first roller the intestine tails can enter between the sub-sections of the first roller and in between the first and second rollers without being stopped or affected by the T-bar.

At least one spray tube capable of spraying water towards a roller may be present in the system. The at least one spray tube may be at least one spray tube for each roller such as one spray tube for at least one roller and two spray tubes for at least one other roller. The at least one spray tube may have a number of nozzles suitable of wetting at least an area of the roller where the at least one intestine under treatment will be positioned. For a roller system with four rollers the number of spray tubes may be e.g. four, five or six, preferably five, such as with two spray tubes being capable of spraying water towards the first sectioned roller e.g. from above and below the roller and one spray tube for each of the second, third and fourth roller.

The treatment system may comprise an exit tray for collecting processed submucose membranes. Such an exit tray is preferably positioned in connection to the last roller of the roller section, such as after the intestine has passed between the third and fourth roller or if more than four rollers are used after the last roller passage. The exit tray preferably directs the intestines to a basin with water to keep the intestines wet until further treatment.

The treatment system may also comprise a collecting basin for collecting serosa membranes. Such a collecting basin is preferably located beneath the first and second roller such that serosa membranes pulled off the intestines by the treatment of the first and second rollers can fall into the collecting basin. Any remaining mucosa present in the intestines may also be squeezed out of the at least one intestine by the treatment of the first and second rollers and fall into the collecting basin.

The treatment system may further comprise a feeder for feeding intestines into the roller section. The feeder may comprise a continuous or endless feeder belt with guiding members for guiding a part of at least one intestine towards the roller section. With `guiding a part of' is meant the intestines in the treatment system is in a looped condition and the part which is guided by being in contact with the feeder belt is the loop such that the tails will succeed when the loop part is directed through the treatment system. The feeder belt may comprise at least one detectable material or sender, which can be incorporated into the material of the feeder belt making it possible to determine whether a guiding member of the feeder belt is in a position capable of being loaded with an intestine. A number of the detectable material or sender may be incorporated into the feeder belt with a predetermined distance, such as a distance corresponding to the distance between the guiding members of the feeder belt. A detectable material may be a piece of metal. Preferably the feeder belt is made of a polymeric material. Preferably the feeder belt is a polymeric material with metal pieces incorporated into the polymeric material such as with a distance along the belt corresponding to the distance between the guiding members. Preferably the guiding members are evenly distributed on the feeder belt i.e. located with similar distance between two successive guiding members.

The feeder of the treatment system may comprise a pick-up area for pre-treated intestines to wait until being picked up by a gripper. The pick-up area may be located after a roller section pre-treating the at least one intestine and before the at least one intestine is to be treated in the treatment system described herein. The pick-up area may be an area where looped intestines accumulates after being pre-treated and ready to enter the treatment system described herein. A slideway may lead the at least one pre-treated intestines to the pick-up area. A stopper for holding intestines may be present in the pick-up area. The stopper may stop the intestines sliding on the slideway and hold the intestines in the pick-up area.

A gripper may be located close to the pick-up area for lifting intestines from the pick-up area towards the feeder belt, such as lifting intestines past the stopper. The backside of the stopper i.e. the side closest to the feeder belt may be designed to guide the looped part of intestines towards the feeder belt when the gripper has lifted the intestine past the stopper.

At least one suction disc such as two suction discs may be located on the gripper and the at least one suction disc may be for holding an intestine while this is being lifted from the pick-up area towards the feeder belt. Preferably one suction disc is present. The at least one suction disc preferably lifts one intestine at a time. The gripper may function by making a vacuum in the at least one suction disc when being in the pick-up area to pick-up an intestine in the loop section of the intestine, the vacuum is kept while the intestine is lifted from the pick-up area and above the stopper. The vacuum may be replaced with an overpressure in the at least one suction disc when the at least one suction disc has passed the stopper and/or is close to the feeder belt. Release of the vacuum or the production of overpressure in the at least one suction disc releases the intestine from the at least one suction disc.

A recorder may be connected to the gripper to determine the presence of an intestine on the gripper and to record the number of intestines lifted from the pick-up area towards the feeder belt. The recorder may determine the presence of an intestine based on the capability to make a vacuum as a vacuum is only produced when an intestine is in contact with the suction disc. If a vacuum is registered in the suction disc just before the time where an intestine should be delivered to the feeder belt then the recorder register this as presence of one intestine and the intestine is counted. The counted number determined by the recorder may be reset and the counting may be restarted such as when a pre-determined number of intestines are lifted to the feeder belt.

The feeder belt with the guiding means may convey the looped part of intestines towards a robot section or an automatic handling section and towards the roller section. The feeder may comprise a collecting and handing-over means for collecting a pre-determined number of intestines being conveyed by the feeder belt before handing-over the collected intestines to a means for directing the intestines into the roller section i.e. before handing-over the intestines to the robot section or automatic handling section. The collecting and handing-over means may be located at the top end of the feeder belt e.g. such that an intestine can slide from the top part of the feeder belt to the collecting and handing-over means where a pre-determined number of intestines can be collected before further processed. The number of intestines at the collecting and handing-over means is determined by the information obtained by the recorder.

Intestines elevated to the top of the feeder belt may automatically slide to a resting area of the collecting and handing-over means while the feeder belt continues and return to the pick-up area.

From the resting area on the collecting and handing-over means where intestines transported or conveyed by the feeder belt rest the intestines may be lifted away by a robot or automatic handling means. The robot or automatic handling means may lift away intestines when a pre-determined numbers of intestines are collected on the resting area, this number may be e.g. between 1 and 40, such as 2-30, e.g. 5-10, such as 7-8 or such as 20-27 e.g. about 25. To finally collect a batch of about 25 finished intestines (i.e. submucose membranes) the treatment system may e.g. treat subgroups of intestines such as the numbers of 7, 7, 6 and 6 (total 26) intestines which are afterwards collected into one batch when finished i.e. after treated as described herein, or e.g. 9, 8, and 8 (total 25). Preferably the treatment system treats 4-15 intestines at a time, such as 5-10. Treating few intestines at a time may increase the quality of the product when compared to treating many intestines at a time.

The feeder belt may be arranged at an angle making it capable of elevating the looped part of at least one intestine in a direction starting from a level below the sectioned first roller to a level above the sectioned first roller. The elevation is preferably performed without the elevated intestine coming into contact with the first roller.

The treatment system may further comprise an automatic handling section or a robot section for handling the intestines at least during a part of the time the intestines are treated in the roller section.

The automatic handling section or robot section may comprise at least two handling fingers. The handling fingers can pick-up intestines collected at the resting area of the feeder's collecting and handing-over means. The handling fingers can be mounted in a free moving bearing such that each handling finger is capable of rotating about itself while still holding or supporting intestines, such a rotation makes it easier for the intestines to slide on the handling fingers when being directed in an overall direction parallel to the longitudinal direction of the first and second rollers.

The automatic handling section or robot section may have at least two pressure pads, each connected to a handling finger for firmly holding an intestine, such as by pressing a pressure pad towards the corresponding handling finger.

The treatment system may further comprise robot movement means or automatic movement means for controlling the movement of the handling fingers and of the pressure pads. The means controlling the two fingers and pressure pads may be two mirrored halves of a robot section or of an automatic handling section and which may function independent of each other though working together to handle the at least one intestine to be treated in the roller section.

The robot movement means or automatic movement means may control the handling fingers and pressure pads such that these simultaneously for each set of finger and pressure pad can be moved at least horizontally and parallel to the length of the rollers (X-direction) and/or vertically and/or horizontally and perpendicular to the length of the rollers (Y- and Z-direction) hereby capable of performing movements up and down, sideways both ways and back and forth. The handling fingers may also be tilted with the fingers pointing in a direction downwards.

The robot movement means or automatic movement means can move the handling fingers and pressure pads in a pre-determined path of motion during the handling of the at least one intestines. The path of motion may include movements of the handling fingers and pressure pads sideways, up and down, backwards and forwards and at least angle the handling fingers to let the intestines slide off the handling fingers. The path of motion of the handling fingers and pressure pads may start from a positon close to the collecting and handing-over means in the feeder. A possible path of motion when handling intestines with two sets of handling fingers and pressure pads may be:
1. When a pre-determined number of intestines are located at the collecting and handing-over means the handling fingers can be moved under the intestines,
2. The intestines can be lifted with the two handling fingers,
3. The handling fingers lifting the intestines can be moved away from the collecting and handing-over means to an area above the first sectioned roller and the second roller,
4. The handling fingers can be moved sideways away from each other such that the intestines may slide (pressure pads in a non-pressing position) on the handling fingers, hereby one tail of each of the intestines to be treated can be brought in between one of the sub-sections of the first sectioned roller and the second roller, and the other tail of each of the intestines can be brought in between the other of the sub-sections of the first sectioned roller and the second roller,
5. The handling fingers can be moved up and down a number of times, e.g. two to seven times, such as three to five times, with the pressure pads in a non-pressing position, in a pressing position or one of the pressure pads in a non-pressing position and the other in a pressing position, hereby the intestines are drawn up and down a corresponding number of times and the serose membrane of each intestine tail is preferably broken or disrupted in a zone located in between the first and second rollers,
6. The handling fingers can be moved in non-parallel and non-mirrored paths such that the intestines are moved (drawn) in one direction parallel to the rollers and such that one of the zones of the tails where the serose membrane has been broken passes at least one of the handling fingers, preferably the zone passes both handling fingers. During this moving of the intestines the pressure pad may be in a non-pressing position at the intestine tails which becomes shorter and the pressure pad may be in a pressing position at the intestine tails which becomes longer. With the pressure pad in a pressing position and by moving the set of handling finger and pressure pad away from the other set of handling finger and pressure pad the intestines are drawn or moved substantially parallel to the length of the rollers,
7. When the intestines are moved in a direction parallel to the length of the rollers in a pre-determined length, the two sets of handling fingers and pressure pads can be moved to a positon having a bendable length of intestines between the two sets of handling fingers and pressure pads, where a bendable length of intestines may be e.g. between 20 and 120 cm, such as between 30 and 80 cm, the part of the intestines between the handling fingers is preferably now only the submucose membrane as the treatment of the first and second rollers pull the serose membrane off the submucose membrane from the zones where the serose membrane preferably are disrupted,
8. The pressure pads may be pressed towards each corresponding handling finger and in a pressing position the two sets of handling fingers and pressure pads may be moved towards each other hereby making a loop on the part of the intestines being located between the two handling fingers,
9. The loops of the intestines can be moved towards the space between the second and the third roller and when the intestines are close to coming into contact with these two rollers or when the intestines are in contact with these two rollers such as in between the two rollers the pressure pads may be set in a non-pressing position and the handling fingers may be angled such that the intestines slide downward and off the handling fingers and the intestines can be drawn by the rollers the remaining way through the roller system. During this process the serose membrane can be pulled of the intestines by the treatment of the first and second rollers.

The invention also relates to a method for treating animal intestines, the method comprises the steps of
a. Obtaining at least one intestine to be treated such as at least one intestine pre-treated such that the mucose lining and the muscular layer is at least partly removed,
b. Treating the intestines in a roller system comprising at least a first sectioned roller.

The method is preferably for finishing the treatment of intestines where the intestines previously were loaded manually in a roller system for the finishing process. The method as described herein may be performed manually or automatic. Preferably the method is an automatic loading of intestines such as in a finishing process. The method may be performed with the treatment system as described herein.

Before intestines are treated in a finishing process the intestines may be treated by a number of roller sections to wash, rinse, clean, remove dissolved mucose lining and remove the muscular layer. Such steps may be performed in a number of roller sections which may be located after each other and the method as described herein may be performed following the other processes.

The intestines are preferably fed in a looped position when performing the finishing process, i.e. the intestines are with their middle part first transported in between the two roller parts of the first sectioned roller and each of the tail parts of the intestines are hereby fed into the treatment system between the first and second roller. Intestines may also be fed into the rollers in a non-looped position i.e. with a leading end of the intestines.

The intestines may be treated between the first and second rollers with an overall moving direction of the intestines from below and up between the first and second roller. This moving direction causes delivering of the pulled off serose membrane below the first and second rollers where the serose membrane can enter into a basin located beneath the first and second rollers.

The surface of the serose membrane can at least partly be mechanically broken by the treatment of the first sectioned roller which may have a grooved surface capable of bending and holding the intestines, the final breakage of the membrane may be performed when the intestines are pulled upward a number of times, such as two to four times.

When the serose membrane is broken, the intestines can be moved in a sideway direction to release the middle part of the serose membrane which then can be pulled off the submucose membrane when the intestine is further treated in the roller system. The different sections of the broken serose membrane can thus be pulled off the submucose membrane while the submucose membrane is pulled forward by pulling rollers of the roller system.

The submucose membranes can be delivered into a collecting basin and optionally at least one end of the membranes can be caught by a bundle collector.

The submucose membranes may be collected in bundles of about 25 on a bundle collector and scraped off to deliver a bundle to an abattoir operator. From here the intestines can be further treated such as being decoloured, salted, sorted etc.

The method of handling the intestines may be an automatic method comprising an automatic feeding of intestines into a roller system with a first sectioned roller and a robot such as a robot movement means or an automatic handling section movement can be handling the intestines e.g. from the time when the intestines are to enter through the spacing of the first sectioned roller.

A further aspect of the invention relates to use of the treatment system as described herein for treating animal intestines such as treating by a method described herein. Preferably the treatment system is used for the finishing process when treating intestines i.e. where the outermost layer - the serose membrane - of the intestine is removed.

### Detailed description of the figures

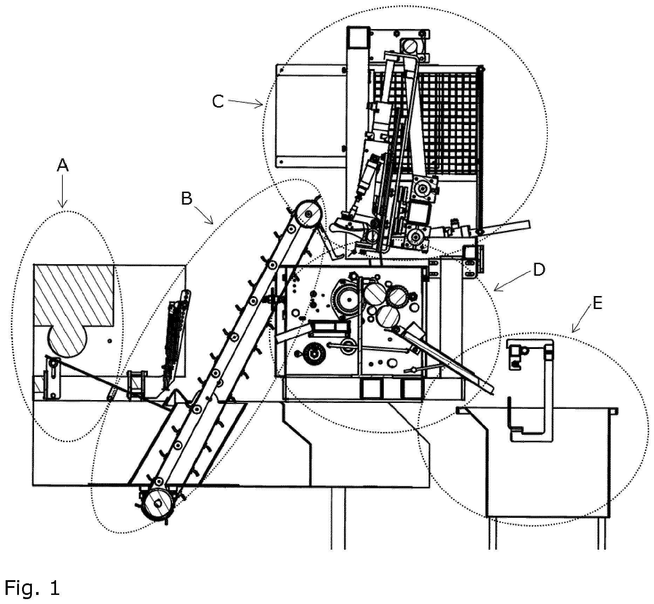

Fig. 1 illustrates a side view of the automatic finishing system as described herein. The system can be described in sections marked by circles: A) A roller section for pre-treating the intestines (not part of the system described herein), B) A feeder section with a gripper and a feeder belt, C) A robot section, D) A roller section and E) An area for collecting treated intestines. The transport direction of the intestines is from left to right. First the intestines are pre-treated in section A, then the pre-treated intestines can be automatic fed to a feeder belt in section B, which deliver the middle part of the intestines to the robot system in section C. The robot system delivers the intestine to the roller system in section D. Finally treated intestines are collected in section E.

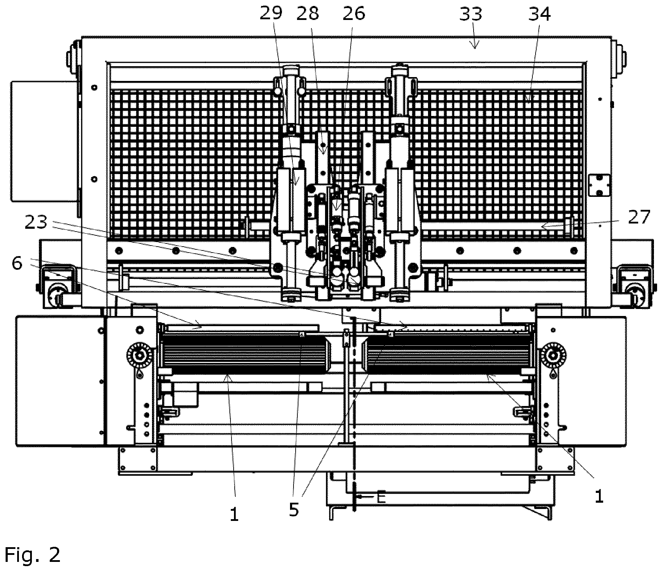

Fig. 2 illustrates a front view of a roller section (lower part) and a robot section (upper part) of a treatment system for treating intestines. In the roller section (where the cover is removed) two parts of a first sectioned roller (1) are visible, slide shoes (5) are located close to the first sectioned roller (1) and spray tubes (6) can spray water towards the roller sections. The robot section illustrates the mirrored right and left part of the robot system. In the middle the handling fingers (23) are located, and these are moved by servo or pneumatic controlling means (27, 28, 29). Pressure pads (not shown) located close to the handling fingers are controlled by pressure pad servo or pneumatic controlling means (26). A frame (33) is located around the robot system and a protective guard (34) protects the moving elements from the surroundings.

Fig. 3 illustrates the roller section in a cross section. The transport direction of the intestines is illustrated with arrows with dotted lines. The tail of the intestines enter from below the first sectioned roller (1) and is treated by the first sectioned roller (1) and the second roller (2), while the submucose membranes are left behind in an exit tray (7) the intestines are further drawn through the roller system by the third roller (3) and fourth roller (4) from where they leaves towards a collecting basin (8). A number of spray tubes (6) which spray water towards the rollers secure the intestines stay wet during the treatment. Curved arrows indicate the turning direction of the rollers, the first sectioned roller (1) and the second roller (2) turn 'opposite' each other.

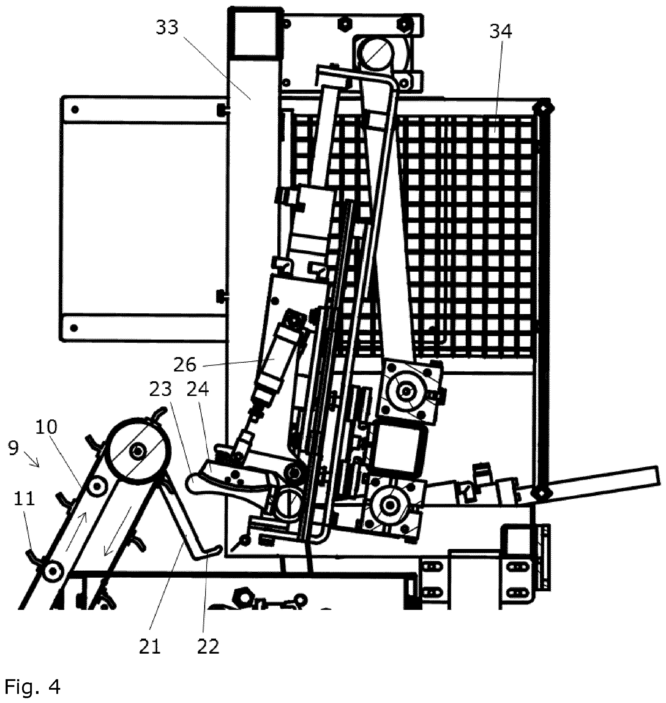

Fig. 4 illustrates a side view of a robot section and a part of the feeder (9) system. Intestines are transported by a feeder belt (10) of the feeder (9) where guiding means (11) secure the intestines stay on the feeder belt (10). Arrows indicate the transport direction of the feeder belt (10). When reaching the top of the feeder belt (10) the intestines slide to the collecting and handing-over means (21) and ends on the resting area (22). When the pre-determined numbers of intestines are located on the resting area (22) the robot will direct the handling fingers (23) to pick up the intestines. At the robot is also illustrated a pressure pad (24) and a pressure pad servo or pneumatic controlling means (26). Further illustrated is part of the frame (33) and of the protective guard (34).

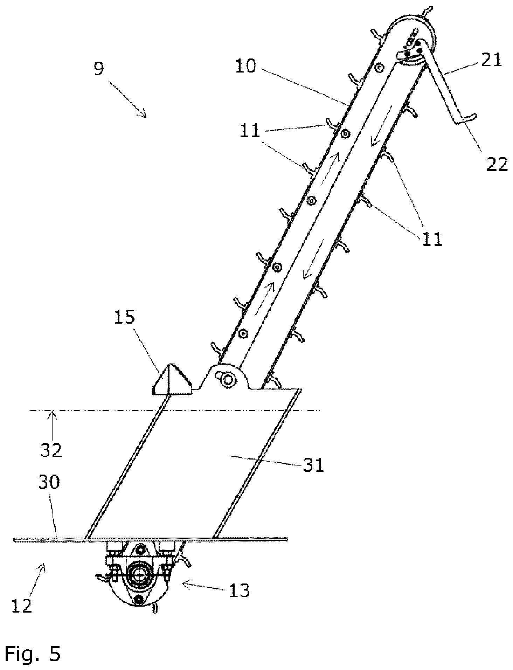

Fig. 5 illustrates a side view of a feeder (9) of a treatment system for treating intestines. Intestines will arrive at the feeder (9) at the left side of the stopper (15) where a gripper (not shown) will lift e.g. one intestine at a time above the stopper (15) where a guiding means (11) at the feeder belt (10) will catch the intestine and the feeder belt (10) will transfer the intestine to the collecting and handing-over means (21) where the intestine will rest at the resting area (22) before the robot system (not shown) takes over. The bottom (30) of the basin (12) is indicated, the intestine tails are most of the time within this basin (12) during the process of treating entire intestines to obtain only the submucose membrane. Preferably the basin (12) contains water to secure the intestines do not dry. Also indicated is the level of the water (32) in the basin (12) and the watertight shielding (31) surrounding the base part of the feeder belt (9). Below the bottom (30) of the basin (12) a feeder belt driver (13) is located.

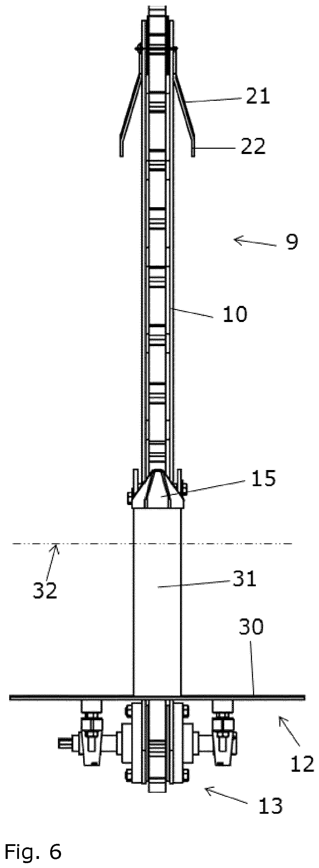

Fig. 6 illustrates a front view of a feeder (9) of a treatment system for treating intestines. The feeder (9) is located in a basin (12) illustrated by the bottom (30) of the basin (12). The basin (12) contains water illustrated by the upper level of the water (32) in the basin (12). At the base part of the feeder (9) a watertight shielding (31) surrounds the feeder belt (10). A feeder belt driver (13) drives the feeder belt (10). A stopper (15) secure intestines can be delivered e.g. only one at a time to the feeder belt (10) which transport the intestines to the collecting and handing-over means (21) where the intestine will rest at the resting area (22) before the robot system (not shown) takes over.

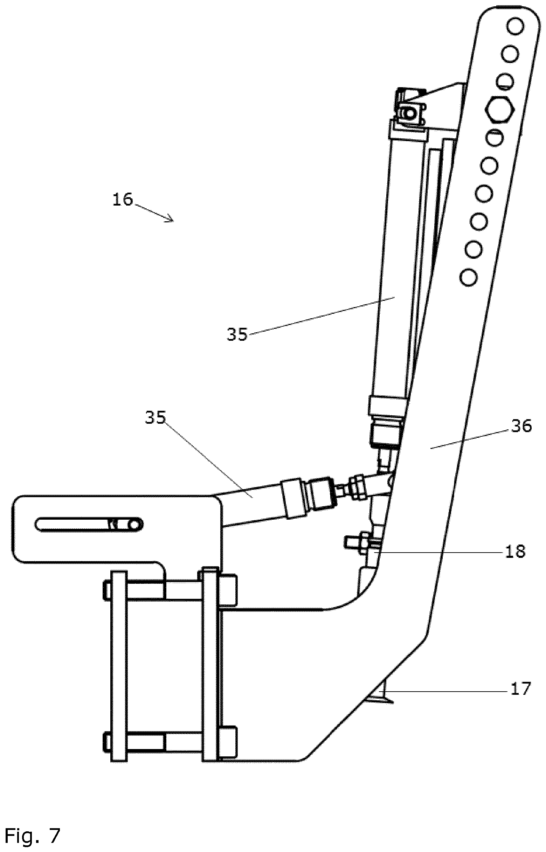

Fig. 7 illustrates a gripper (16). A fixture (36) holds the gripper (16). A suction disc (17) is connected to servo or pneumatic controlling means (35) which makes the suction disc (17) move backwards and forwards and also up and down in the process of moving intestines towards the feeder belt (not shown). An air connection means (18) is located close to the suction disc (17) and another air connection means (not shown) is located on the other side of the gripper (16). One air connection means (18) makes a vacuum in the suction disc (17) when an intestine should be transported pass the stopper (not shown) and the other air connection means makes an overpressure of air when the intestine should be delivered to the feeder belt.

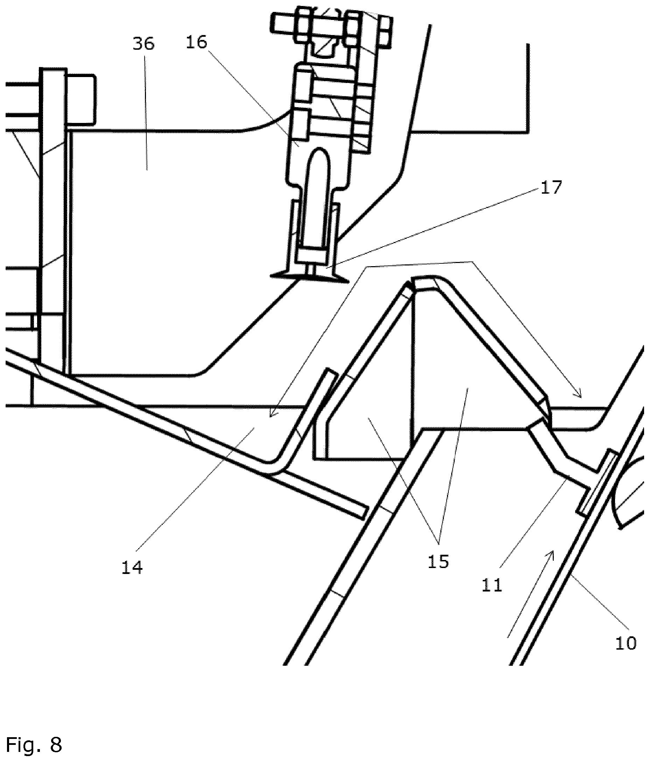

Fig. 8 illustrates part of a gripper and its location in a treatment system for treating intestines. A fixture (36) holds the gripper. Folded parts of pre-treated intestines will be collected in the pick-up area (14) waiting to be loaded to the treatment system for finishing the intestines. A gripper (16) with a suction disc (17) will with vacuum lift an intestine from the pick-up area (14) pass the stopper (15) and deliver the intestine to the feeder belt (10) by releasing the vacuum and optionally activation of overpressure in the suction disc (17). In the process of moving intestines the suction disc (17) will move backwards and forwards as indicated with the end positions of the twisted double-arrowed line located above the stopper (15). The suction disc (17) is also moved over the stopper (15). Afterwards a guiding means (11) will bring the folded part of the intestine along the feeder belt (10) in the direction indicated by the single-arrowed line.

### List of reference signs

In the figures, identical structures, elements or parts that appear in more than one figure are generally labeled with the same numeral in all the figures in which they appear.
1. First sectioned roller
2. Second roller
3. Third roller
4. Fourth roller
5. Slide shoe
6. Spray tube
7. Exit tray
8. Collecting basin
9. Feeder
10. Feeder belt
11. Guiding means
12. Basin for intestines prior to enter the feeder and roller section
13. Feeder belt driver
14. Pick-up area
15. Stopper
16. Gripper
17. Suction disc
18. Air connection means
19. Lifting and moving means
20. Recorder
21. Collecting and handing-over means
22. Resting area
23. Handling fingers
24. Pressure pad
25. Arm for holding handling finger
26. Pressure pad servo or pneumatic controlling means
27. Horizontal arm servo or pneumatic controlling means
28. Vertical arm servo or pneumatic controlling means
29. Turning arm servo or pneumatic controlling means
30. Bottom of basin
31. Watertight shielding
32. Level of water
33. Frame
34. Protective guard
35. Servo or pneumatic controlling means
36. Fixture

The invention is defined in the appended claims.

## Claims

1. A system for automatic finishing of a pre-treated animal intestine, said system comprising:
• a roller section (D) comprising at least:
a. a sectioned first rotatable roller (1), which is sectioned in at least two sub-sections transversely to an imaginary axis running through the sub-sections, said sub-sections being separated along the imaginary axis leaving a space between the sub-sections; and
b. a second rotatable roller (2), with an axis being parallel to the imaginary axis of the sectioned first roller (1), said second roller (2) being of a length making the second roller capable of working together with each of said at least two sub-sections of said sectioned first roller (1);
• a feeder section (B) for feeding intestines into said roller section (D), said feeder section (B) comprising a feeder (9), comprising a feeder belt (10) with guiding means (11), for transporting or conveying a part of the intestine towards said roller section (D); **characterized in** further comprising
• an automatic handling section (C), comprising a robot or automatic handling means being adapted to lift away the intestine transported or conveyed by the feeder belt (10),
• said robot or automatic handling means comprising a robot movement means or automatic movement means adapted to control at least two handling fingers (23) and at least two pressure pads (24), each connected to a handling finger (23) for firmly gripping and holding the intestine,
• the robot movement means or automatic movement means further being adapted to control the handling fingers (23) and pressure pads (24) so as to move the handling fingers (23) and pressure pads (24) in a pre-determined path of motion during the handling of the one intestine, where the path of motion may include movements of the handling fingers and pressure pads sideways, up and down, backwards and forwards and at least angle the handling fingers to let the intestine slide off the handling fingers (23),
• and where the robot or automatic handling system is adapted to deliver the intestine to the roller system in the roller section (D).

2. The system according to claim 1, wherein said roller section (D) comprises one or more features selected from the group consisting of:
a. each sub-section of the sectioned first roller (1) has a shaft only driven and attached in the end away from the space between the at least two sub-sections;
b. a third roller (3), and optionally also a fourth rotatable roller (4);
c. all the rollers (1, 2, 3, 4) are longitudinal cylindrical rollers;
d. all the rollers (1, 2, 3, 4) are parallel to each other along an axis of the longitudinal rollers;
e. the space between sub-sections of the first roller (1) has a length from one sub-section to the next sub-section of at least 0.1 cm;
f. the sectioned first roller (1) has a grooved surface, and the grooves are parallel to the length of the roller;
g. the sectioned first roller (1) has a surface of rubber;
h. the second roller (2) has a smooth surface;
i. the second roller (2) has a surface of metal;
j. the third roller (3) has a grooved surface, and the grooves are parallel to the length of the roller;
k. the third roller (3) has a surface of rubber;
l. the fourth roller (4) has a smooth surface;
m.the fourth roller (4) has a surface of metal;
n. the first roller (1) and the second roller (2) are located close to each other;
o. the second roller (2) and the third roller (3) are located close to each other;
p. the third roller (3) and the fourth roller (4) are located close to each other;
q. the first, second and third roller (1, 2, 3) are positioned substantially horizontal to each other, and the fourth roller (4) is positioned beneath the third roller (3);
r. the first roller (1) rolls opposite the transport direction of the intestines to be treated;
s. the second roller (2) rolls in the transport direction of the intestines to be treated;
t. the third roller (3) rolls in the transport direction of the intestines to be treated;
u. the fourth roller (4) rolls in the transport direction of the intestines to be treated;
v. the speed of rotation of the first roller (1) is higher than the speed of rotation of the other rollers (2, 3, 4), such as at least two times higher, preferably about 10 times higher;
w. a slide shoe (5) is connected to each sub-section of the first sectioned roller (1), said slide shoe (5) secures, that the intestines under preparation between the first roller (1) and second roller (2) do not slide into the area between the two sub-sections of the first roller (1);
x. at least one spray tube (6) capable of spraying water towards a roller (1, 2, 3, 4);
y. exit tray (7) for collecting processed submucose membranes; and
z. a collecting basin (8) for collecting serosa membranes.

3. The system according to claim 1, wherein said feeder section (B) comprises one or more features selected from the group of:
a. a pick-up area (14) for pre-treated intestines to wait until being picked up by a gripper (16);
b. a stopper (15) for holding intestines in the pick-up area (14);
c. a gripper (16) for lifting intestines from the pick-up area (14) towards the feeder belt (10);
d. a suction disc (17) on the gripper (9) for holding an intestine while being lifted from the pick-up area (14) towards the feeder belt (10);
e. a recorder (20) to determine the presence of an intestine on the gripper (16), and to record the number of intestines lifted from the pick-up area (14) towards the feeder belt (10);
f. said feeder (9) comprises collecting and handing-over means (21) for collecting a pre-determined number of intestines being transported by said feeder belt (10) before handing-over the collected intestines to a means for directing said intestines into said roller section;
g. said collecting and handing-over means (21) is located close to the uppermost part of said feeder belt (10) such that intestines elevated by the feeder belt (10) automatically slide to a resting area (22) of said collecting and handing-over means (21);
h. a resting area (22) on said collecting and handing-over means (21) where intestines transported by said feeder belt (10) rest before being lifted away by a robot; and
i. said feeder belt (10) is placed at an angle making it capable of elevating said part of at least one intestine in a direction starting from a level below the sectioned first roller (1) to a level above the sectioned first roller (1).

4. The system according to claim 1, wherein said automatic handling section (C) comprises one or more features selected from the group consisting of:
a. at least two handling fingers (23);
b. at least two pressure pads (24), each connected to a handling finger (23) for firmly holding an intestine; and
c. movement means for controlling the movement of the handling fingers (23).

5. A method for automatic finishing of pre-treated animal intestines, said method comprising the subsequent steps of:
a. obtaining a pre-treated animal intestine; and
b. treating said intestine in the system of claims 1-4.

6. The method of claim 5, which method comprises:
a. automatic feeding of the pre-treated intestine into the roller section (D); and wherein:
b. an automatic handling section (C) is handling the intestines before and when the intestines enters said first sectioned roller (1).

7. The method according to either one of claims 5-6, which method comprises one or more features selected from the group consisting of:
a. the intestines are fed in a looped position, i.e. the intestines are with their middle part first transported in between two roller parts of the first sectioned roller (1) and each of the intestine's tail parts are hereby fed into the treatment system between the first roller (1) and a second roller (2);
b. the intestines are treated between the first (1) and second roller (2) with an overall moving direction of the intestines from below and up between the first roller (1) and a second roller (2);
c. the surface of the serose membrane is mechanically at least partly broken by the treatment of the first sectioned roller (1) which has a grooved surface capable of bending and holding the intestines, a final breakage of the membrane may be performed by pulling the intestines upward;
d. the intestines are moved in a sideway direction whereby one tail of each of the intestines becomes shorter and the other tail becomes larger to release the middle part of the serose membrane;
e. the serose membrane is pulled off the submucose membrane while the submucose membrane is pulled forward by pulling rollers;
f. the submucose membranes are delivered into a collecting basin; and
g. the submucose membranes are collected in bundles of 25 on a bundle collector and optionally scraped off to deliver a bundle to an abattoir operator.

8. Use of the system according to any one of claims 1-4, for the finishing of pre-treated animal intestines.

## Patentansprüche

1. System zur automatischen Endbearbeitung eines vorbehandelten Tierdarms, umfassend:
• einen Rollenabschnitt (D), bestehend aus mindestens:
a. eine in Abschnitte unterteilte erste drehbare Walze (1), die quer zu einer imaginären Achse, die durch die Unterabschnitte verläuft, in mindestens zwei Unterabschnitte unterteilt ist, wobei die Unterabschnitte entlang der imaginären Achse getrennt sind und zwischen den Unterabschnitten einen Raum lassen; Und
b. eine zweite drehbare Walze (2), deren Achse parallel zur imaginären Achse der in Abschnitte unterteilten ersten Walze (1) verläuft, wobei die zweite Walze (2) eine Länge hat, die es der zweiten Walze ermöglicht, mit jeder dieser Walzen zusammenzuarbeiten zwei Unterabschnitte der unterteilten ersten Walze (1);
• einen Zuführabschnitt (B) zum Zuführen von Därmen in den Rollenabschnitt (D), wobei der Zuführabschnitt (B) einen Zuführer (9) umfasst, der ein Zuführband (10) mit Führungsmitteln (11) zum Transportieren oder Fördern von a Teil des Darms in Richtung des Rollenabschnitts (D); ***dadurch gekennzeichnet,* dass** es weiterhin umfasst,
• einen automatischen Handhabungsabschnitt (C), der einen Roboter oder eine automatische Handhabungseinrichtung umfasst, die dazu geeignet ist, den vom Zuführband (10) transportierten oder beförderten Darm abzuheben,
• wobei der Roboter oder die automatische Handhabungseinrichtung eine Roboterbewegungseinrichtung oder eine automatische Bewegungseinrichtung umfasst, die zur Steuerung von mindestens zwei Handhabungsfingern (23) und mindestens zwei Druckkissen (24) geeignet ist, die jeweils mit einem Handhabungsfinger (23) zum festen Greifen verbunden sind den Darm halten,
• Die Roboterbewegungsmittel oder automatischen Bewegungsmittel sind außerdem dazu ausgelegt, die Handhabungsfinger (23) und Druckkissen (24) so zu steuern, dass sie die Handhabungsfinger (23) und Druckkissen (24) auf einem vorbestimmten Bewegungspfad bewegen während der Handhabung des einen Darms, wobei der Bewegungspfad Bewegungen der Handhabungsfinger und Druckpolster seitwärts, auf und ab, rückwärts und vorwärts umfassen und die Handhabungsfinger zumindest so anwinkeln kann, dass der Darm von den Handhabungsfingern gleiten kann (23 ),
• und wo der Roboter oder das automatische Handhabungssystem angepasst ist, um den Darm dem Rollensystem im Rollenabschnitt (D) zuzuführen.

2. System nach Anspruch 1, wobei der Rollenabschnitt (D) ein oder mehrere Merkmale umfasst, ausgewählt aus der Gruppe bestehend aus:
a. jeder Unterabschnitt der unterteilten ersten Walze (1) eine nur angetriebene Welle aufweist, die an dem vom Raum zwischen den mindestens zwei Unterabschnitten entfernten Ende befestigt ist;
b. eine dritte Walze (3) und optional auch eine vierte drehbare Walze (4);
c. alle Rollen (1, 2, 3, 4) sind zylindrische Längsrollen;
d. alle Rollen (1, 2, 3, 4) sind parallel zueinander entlang einer Achse der Längsrollen;
e. der Zwischenraum zwischen Teilabschnitten der ersten Walze (1) von einem Teilabschnitt zum nächsten eine Länge von mindestens 0,1 cm aufweist;
f. die in Abschnitte unterteilte erste Walze (1) hat eine gerillte Oberfläche und die Rillen verlaufen parallel zur Länge der Walze;
g. die unterteilte erste Walze (1) hat eine Oberfläche aus Gummi;
h. die zweite Walze (2) hat eine glatte Oberfläche;
i. die zweite Walze (2) hat eine Oberfläche aus Metall;
j. die dritte Walze (3) hat eine gerillte Oberfläche und die Rillen verlaufen parallel zur Länge der Walze;
k. die dritte Walze (3) hat eine Oberfläche aus Gummi;
l. die vierte Walze (4) hat eine glatte Oberfläche;
m. die vierte Walze (4) hat eine Oberfläche aus Metall;
n. die erste Walze (1) und die zweite Walze (2) liegen nahe beieinander;
o. die zweite Walze (2) und die dritte Walze (3) liegen nahe beieinander;
p. die dritte Walze (3) und die vierte Walze (4) liegen nahe beieinander;
q. die erste, zweite und dritte Walze (1, 2, 3) im Wesentlichen horizontal zueinander positioniert sind und die vierte Walze (4) unter der dritten Walze (3) positioniert ist;
r. die erste Walze (1) rollt entgegen der Transportrichtung der zu behandelnde Därme;
s. die zweite Walze (2) rollt in Transportrichtung der zu behandelnde Därme;
t. die dritte Walze (3) rollt in Transportrichtung der zu behandelnde Därme;
u. die vierte Walze (4) rollt in Transportrichtung der zu behandelnde Därme;
v. die Drehgeschwindigkeit der ersten Walze (1) höher ist als die Drehgeschwindigkeit der anderen Walzen (2, 3, 4), beispielsweise mindestens zweimal höher, vorzugsweise etwa zehnmal höher;
w. Mit jedem Teilabschnitt der ersten Profilwalze (1) ist ein Gleitschuh (5) verbunden, der sicherstellt, dass die in Vorbereitung befindlichen Därme zwischen der ersten Walze (1) und der zweiten Walze (2) nicht durchrutschen in den Bereich zwischen den beiden Teilabschnitten der ersten Walze (1) gleiten;
x. mindestens ein Sprührohr (6), das Wasser in Richtung einer Walze (1, 2, 3, 4) sprühen kann;
y. Ausgabeschale (7) zum Sammeln verarbeiteter Submukosa Membranen; Und
z. ein Auffangbecken (8) zum Sammeln von Serosa Membranen.

3. System nach Anspruch 1, wobei der Zufuhrabschnitt (B) ein oder mehrere Merkmale umfasst, die aus der folgenden Gruppe ausgewählt sind:
a. einen Aufnahmebereich (14), in die vorbehandelten Därme warten, bis sie von einem Greifer (16) aufgenommen werden;
b. einen Stopfen (15) zum Halten von Eingeweiden im Aufnahmebereich (14);
c. einen Greifer (16) zum Anheben der Eingeweide vom Aufnahmebereich (14) zum Zuführband (10);
d. eine Saugscheibe (17) am Greifer (9) zum Halten eines Darms, während dieser vom Aufnahmebereich (14) zum Zuführband (10) angehoben wird;
e. einen Rekorder (20), um das Vorhandensein eines Darms auf dem Greifer (16) zu bestimmen und um die Anzahl der vom Aufnahmebereich (14) zum Zuführband (10) gehobenen Därme aufzuzeichnen;
f. die Zuführeinrichtung (9) eine Sammel- und Übergabeeinrichtung (21) zum Sammeln einer vorbestimmten Anzahl von Därmen aufweist, die durch das Zuführband (10) transportiert werden, bevor die gesammelten Därme an eine Einrichtung zum Leiten der Därme in die Walze übergeben, werden Abschnitt;
g. die Sammel- und Übergabeeinrichtung (21) nahe am obersten Teil des Zuführbandes (10) angeordnet ist, so dass durch das Zuführband (10) angehobene Därme automatisch zu einem Ruhebereich (22) der Sammel- und Übergabeeinrichtung gleiten. über Mittel (21);
h. einen Ruhebereich (22) auf der Sammel- und Übergabeeinrichtung (21), wo die vom Zuführband (10) transportierten Eingeweide ruhen, bevor sie von einem Roboter weggehoben werden; Und
i. das Zuführband (10) in einem Winkel angeordnet ist, der es ermöglicht, den Teil von mindestens einem Darm in einer Richtung anzuheben, die von einer Ebene unterhalb der unterteilten ersten Walze (1) bis zu einer Ebene oberhalb der unterteilten ersten Walze (1) beginnt.

4. System nach Anspruch 1, wobei der automatische Handhabungsabschnitt (C) ein oder mehrere Merkmale umfasst, ausgewählt aus der Gruppe bestehend aus:
a. mindestens zwei Handhabungsfinger (23);
b. mindestens zwei Druckpolster (24), die jeweils mit einem Handhabungsfinger (23) zum festen Halten eines Darms verbunden sind; Und
c. Bewegungsmittel zum Steuern der Bewegung der Handhabungsfinger (23).

5. Verfahren zur automatischen Endbearbeitung von vorbehandelten Tierdärmen, wobei das Verfahren die folgenden Schritte umfasst:
a. Gewinnung eines vorbehandelten Tierdarms; Und
b. Behandeln des Darms im System der Ansprüche 1-4.

6. Verfahren nach Anspruch 5, wobei das Verfahren umfasst:
a. automatische Zuführung des vorbehandelten Darms in den Rollenabschnitt (D); und wobei:
b. ein automatischer Handhabungsabschnitt (C) handhabt die Eingeweide vor und wenn die Eingeweide in die erste unterteilte Walze (1) eintreten.

7. Das Verfahren nach einem der Ansprüche 5-6, wobei das Verfahren ein oder mehrere Merkmale umfasst, ausgewählt aus der Gruppe bestehend aus:
a. die Eingeweide werden in einer Schlaufenlage zugeführt, d.h. die Eingeweide werden mit ihrem Mittelteil zunächst zwischen zwei Walzenteilen der ersten Profilwalze (1) transportiert und dabei jeweils mit ihrem Schwanzteil in das Behandlungssystem zwischen der ersten Walze eingespeist (1) und eine zweite Walze (2);
b. die Eingeweide werden zwischen der ersten (1) und der zweiten Walze (2) behandelt, wobei die gesamte Bewegungsrichtung der Eingeweide zwischen der ersten Walze (1) und einer zweiten Walze (2) von unten nach oben verläuft;
c. die Oberfläche der serösen Membran wird durch die Behandlung mit der ersten unterteilten Walze (1), die eine gerillte Oberfläche aufweist, die in der Lage ist, die Eingeweide zu biegen und zu halten, mechanisch zumindest teilweise aufgebrochen, ein endgültiges Aufbrechen der Membran kann durch Hochziehen der Eingeweide erfolgen;
d. die Eingeweide werden seitwärts bewegt, wodurch ein Schwanz jedes Darms kürzer und der andere Schwanz größer wird, um den mittleren Teil der serösen Membran freizugeben;
e. die Serosa Membran wird von der Submukosa Membran abgezogen, während die Submukosa Membran durch Zugrollen nach vorne gezogen wird;
f. die Submukosa Membranen werden in ein Auffangbecken abgegeben; Und
g. die Submukosa Membranen werden in Bündeln zu je 25 Stück auf einem Bündelsammler gesammelt und optional abgekratzt, um ein Bündel an einen Schlachthofbetreiber zu liefern.

8. Verwendung des Systems nach einem der Ansprüche 1-4, zur Endbearbeitung von vorbehandelten Tierdärmen.

## Revendications

1. Système de finition automatique d'intestin animal prétraité, ledit système comprenant :
• un tronçon de rouleaux (D) comprenant au moins:
a. un premier rouleau rotatif sectionné (1), qui est sectionné en au moins deux sous-sections transversalement à un axe imaginaire traversant les sous-sections, lesdites sous-sections étant séparées le long de l'axe imaginaire en laissant un espace entre les sous-sections; et
b. un deuxième rouleau rotatif (2), dont l'axe est parallèle à l'axe imaginaire du premier rouleau sectionné (1), ledit deuxième rouleau (2) étant d'une longueur rendant le deuxième rouleau capable de travailler avec chacun desdits au moins deux sous-sections dudit premier rouleau sectionné (1);
• une section d'alimentation (B) pour introduire des intestins dans ladite section à rouleaux (D), ladite section d'alimentation (B) comprenant un alimentateur (9), comprenant une courroie d'alimentation (10) avec des moyens de guidage (11), pour transporter ou transporter un une partie de l'intestin vers ladite section de rouleau (D); qui est ***caractérisé en* ce qu'**il comprend en outre
• une section de manutention automatique (C), comprenant un robot ou des moyens de manutention automatique adaptés à soulever l'intestin transporté ou convoyé par le tapis d'alimentation (10),
• ledit robot ou moyen de manipulation automatique comprenant un moyen de déplacement du robot ou moyen de déplacement automatique adapté pour commander au moins deux doigts de manipulation (23) et au moins deux patins de pression (24), reliés chacun à un doigt de manipulation (23) pour une préhension ferme et tenant l'intestin,
• les moyens de déplacement du robot ou les moyens de déplacement automatique étant en outre adaptés pour commander les doigts de manipulation (23) et les patins de pression (24) de manière à déplacer les doigts de manipulation (23) et les patins de pression (24) selon une trajectoire de mouvement prédéterminée pendant la manipulation d'un intestin, où la trajectoire de mouvement peut inclure des mouvements des doigts de manipulation et des coussinets de pression latéralement, de haut en bas, d'avant en arrière et au moins incliner les doigts de manipulation pour permettre à l'intestin de glisser des doigts de manipulation (23 ),
• et où le robot ou le système de manutention automatique est adapté pour amener l'intestin au système de rouleaux dans la section de rouleaux (D).

2. Système selon la revendication 1, dans lequel ladite section de rouleau (D) comprend une ou plusieurs caractéristiques sélectionnées dans le groupe constitué de:
a. chaque sous-section du premier rouleau sectionné (1) comporte un arbre entraîné et fixé uniquement à l'extrémité éloignée de l'espace entre lesdites au moins deux sous-sections;
b. un troisième rouleau (3), et éventuellement également un quatrième rouleau rotatif (4);
c. tous les rouleaux (1, 2, 3, 4) sont des rouleaux cylindriques longitudinaux;
d. tous les rouleaux (1, 2, 3, 4) sont parallèles entre eux le long d'un axe des rouleaux longitudinaux;
e. l'espace entre les sous-sections du premier rouleau (1) a une longueur d'une sous-section à la sous-section suivante d'au moins 0,1 cm;
f. le premier rouleau sectionné (1) a une surface rainurée, et les rainures sont parallèles à la longueur du rouleau;
g. le premier rouleau sectionné (1) a une surface en caoutchouc;
h. le deuxième rouleau (2) a une surface lisse;
i. le deuxième rouleau (2) a une surface métallique;
j. le troisième rouleau (3) a une surface rainurée, et les rainures sont parallèles à la longueur du rouleau;
k. le troisième rouleau (3) a une surface en caoutchouc;
l. le quatrième rouleau (4) a une surface lisse;
m. le quatrième rouleau (4) a une surface métallique;
n. le premier rouleau (1) et le deuxième rouleau (2) sont situés à proximité l'un de l'autre;
o. le deuxième rouleau (2) et le troisième rouleau (3) sont situés à proximité l'un de l'autre;
p. le troisième rouleau (3) et le quatrième rouleau (4) sont situés à proximité l'un de l'autre;
q. les premier, deuxième et troisième rouleaux (1, 2, 3) sont positionnés sensiblement horizontalement l'un par rapport à l'autre, et le quatrième rouleau (4) est positionné sous le troisième rouleau (3);
r. le premier rouleau (1) roule dans le sens opposé au sens de transport des intestins à traiter;
s. le deuxième rouleau (2) roule dans le sens de transport des intestins à traiter;
t. le troisième rouleau (3) roule dans le sens de transport des intestins à traiter;
u. le quatrième rouleau (4) roule dans le sens de transport des intestins à traiter;
v. la vitesse de rotation du premier rouleau (1) est supérieure à la vitesse de rotation des autres rouleaux (2, 3, 4), par exemple au moins deux fois supérieure, de préférence environ 10 fois supérieure;
w. un patin coulissant (5) est relié à chaque sous-section du premier rouleau sectionné (1), ledit patin coulissant (5) garantit que les intestins en cours de préparation entre le premier rouleau (1) et le deuxième rouleau (2) ne se coincent pas glisser dans la zone située entre les deux sous-sections du premier rouleau (1);
x. au moins un tube de pulvérisation (6) capable de pulvériser de l'eau vers un rouleau (1, 2, 3, 4);
y. un plateau de sortie (7) pour collecter les membranes sous-muqueuses traitées; et
z. un bassin collecteur (8) pour recueillir les membranes séreuses.

3. Système selon la revendication 1, dans lequel ladite section d'alimentation (B) comprend une ou plusieurs fonctionnalités sélectionnées dans le groupe de:
a. une zone de prélèvement (14) pour les intestins prétraités attendant d'être récupérés par une pince (16);
b. un bouchon (15) pour maintenir les intestins dans la zone de ramassage (14);
c. une pince (16) pour soulever les intestins depuis la zone de ramassage (14) vers la courroie d'alimentation (10);
d. un disque d'aspiration (17) sur la pince (9) pour maintenir un intestin tout en étant soulevé depuis la zone de ramassage (14) vers la courroie d'alimentation (10);
e. un enregistreur (20) pour déterminer la présence d'un intestin sur la pince (16) et pour enregistrer le nombre d'intestins soulevés depuis la zone de ramassage (14) vers la courroie d'alimentation (10);
f. ledit alimentateur (9) comprend des moyens de collecte et de remise (21) pour collecter un nombre prédéterminé d'intestins transportés par ladite bande d'alimentation (10) avant de remettre les intestins collectés à un moyen pour diriger lesdits intestins dans ledit rouleau section;
g. ledit moyen de collecte et de remise (21) est situé à proximité de la partie la plus haute de ladite bande d'alimentation (10) de telle sorte que les intestins élevés par la bande d'alimentation (10) glissent automatiquement vers une zone de repos (22) dudit moyen de collecte et de remise moyens (21);
h. une zone de repos (22) sur lesdits moyens de collecte et de remise (21) où reposent les intestins transportés par ladite bande d'alimentation (10) avant d'être soulevés par un robot; et
i. ladite courroie d'alimentation (10) est placée selon un angle qui la rend capable d'élever ladite partie d'au moins un intestin dans une direction allant d'un niveau situé au-dessous du premier rouleau sectionné (1) jusqu'à un niveau situé au-dessus du premier rouleau sectionné (1).

4. Système selon la revendication 1, dans lequel ladite section de manipulation automatique (C) comprend une ou plusieurs fonctionnalités sélectionnées dans le groupe constitué de:
a. au moins deux doigts de manipulation (23);
b. au moins deux coussinets de pression (24), chacun relié à un doigt de manipulation (23) pour maintenir fermement un intestin; et
c. des moyens de déplacement pour contrôler le mouvement des doigts de manipulation (23).

5. Procédé de finition automatique d'intestins d'animaux prétraités, ledit procédé comprenant les étapes suivantes:
a. obtenir un intestin d'animal prétraité; et
b. traiter ledit intestin dans le système des revendications 1 à 4.

6. Procédé selon la revendication 5, lequel procédé comprend:
a. introduction automatique de l'intestin prétraité dans la section à rouleaux (D); et dans lequel:
b. une section de manipulation automatique (C) manipule les intestins avant et lorsque les intestins entrent dans ledit premier rouleau sectionné (1).

7. Procédé selon l'une ou l'autre des revendications 5 à 6, lequel procédé comprend une ou plusieurs caractéristiques sélectionnées dans le groupe constitué de:
a. les intestins sont alimentés dans une position en boucle, c'est-à-dire que les intestins sont d'abord transportés avec leur partie médiane entre deux parties de rouleau du premier rouleau sectionné (1) et chacune des parties de queue de l'intestin est ainsi introduite dans le système de traitement entre le premier rouleau (1) et un deuxième rouleau (2);
b. les intestins sont traités entre le premier (1) et le deuxième rouleau (2) avec une direction de déplacement globale des intestins du bas vers le haut entre le premier rouleau (1) et un deuxième rouleau (2);
c. la surface de la membrane séreuse est brisée mécaniquement au moins en partie par le traitement du premier rouleau sectionné (1) qui présente une surface rainurée capable de plier et de retenir les intestins, une rupture finale de la membrane peut être réalisée en tirant les intestins vers le haut;
d. les intestins sont déplacés dans une direction latérale, de sorte qu'une queue de chacun des intestins devient plus courte et l'autre queue devient plus grande pour libérer la partie médiane de la membrane séreuse;
e. la membrane séreuse est retirée de la membrane sous-muqueuse tandis que la membrane sous-muqueuse est tirée vers l'avant par des rouleaux de traction;
f. les membranes sous-muqueuses sont délivrées dans un bassin collecteur; et
g. les membranes sous-muqueuses sont collectées en paquets de 25 sur un collecteur de paquets et éventuellement grattées pour livrer un paquet à un opérateur d'abattoir.

8. Utilisation du système selon l'une quelconque des revendications 1 à 4, pour la finition d'intestins d'animaux prétraités.
